# EUROPEAN PATENT SPECIFICATION

(11) **EP 1 776 540 B1**
(45) Date of publication and mention of the grant of the patent: **09.05.2012**
(21) Application number: 05763014.7
(22) Date of filing: 27.07.2005
(51) Int. Cl.: F16L 55/134

(54) **PLUGGING DEVICE AND METHOD**
STOPFENVORRICHTUNG UND -VERFAHREN
DISPOSITIF ET PROCEDE DE BOUCHAGE

(30) Priority: 10.08.2004 AU 2004904485; 23.02.2005 AU 2005900830; 11.03.2005 AU 2005901178
(43) Date of publication of application: 25.04.2007
(73) Proprietor: Borland, Neal Christopher, Denistone NSW 2114 (AU)
(72) Inventor: Borland, Neal Christopher, Denistone NSW 2114 (AU)
(74) Representative: Davies, Robert Ean
(86) International application number: PCT/AU2005/001105
(87) International publication number: WO 2006/015406

(56) References cited:
- CA-A1- 2 296 913
- DE-A1- 4 200 593
- DE-A1- 10 224 707
- US-A- 4 398 565
- US-A- 5 435 478
- US-A- 5 901 752
- US-A1- 2004 112 451

## Description

### Technical Field

The present invention relates to a plugging device and a method of use of the device, and in particular to a pipe plugging device and method which is useful for temporarily impeding the flow of fluid within a pipe.

The present invention is particularly useful when it is desired to fix or repair a pipe, most particularly a water pipe, and when the flow of fluid therein is desired to be firstly impeded.

### Background Art

At present, when it is necessary to repair a broken water pipe, such as a copper water pipe, by means of welding or the like, it is necessary to first impede the flow of water within the copper pipe. In large housing or commercial premises, such as a building comprising a plurality of home units, that is, where there is an extensive amount of piping, a considerable duration of time often expires whilst it is ensured that all the water within the pipe, upstream of the breakage, is extracted from the pipe such that it will not drip within the repairing area whilst the repair is in progress.

When a water pipe bursts, it is necessary to cut the water pipe on either side of the burst area, such that a new piece of pipe can be inserted and welded into position. It is not practical to provide a permanent plug into a portion of the pipe, since there is no means for removing the plug after welding of the new piece of pipe into position.

Presently, the common method of temporarily plugging a pipe is to insert a piece of bread or other like material which eventually dissolves or disintegrates after a predetermined time. The main problem with utilising bread or the like is that sometimes not all the material dissolves, but rather, becomes trapped in another section of the pipe, consequently causing a blockage. The consequence of this is that further work has to be carried out, generally requiring the cutting of the blocked portion of pipe containing the bread or the like material. Obviously, the disadvantage of this situation will be appreciated.

It is known to provide a form of inflatable bag to expand to the inner circumference of a pipe for the purpose of repair of the pipe. US 4398565 discloses a bag secured to a hollow tube having an air outlet opening and air inlet opening to allow inflation of a bag in order to plug a pipe. CA 2296913 discloses a device which can be inserted into an open end of a pipe and expanded by releasing a compressed gas charge. US 5285806 discloses a device that includes an inflation bag which can be inserted and inflated, intended to seal gas pipes. GB 2373037 discloses an inflatable bag that can be inserted into a pipe and inflated via a pump, with the intention of preventing the flow of gas in gas pipes. US 2002/0083989 discloses a pipe sealing device that has two inflatable plugs to prevent fluid flow through a section of pipe, each inflatable plug has a plurality of ports.
US patent application US2004/0112451A1 discloses a flow-through inflatable plug assembly inflatable in a pipeline. The flow-through inflatable plug assembly includes a flow-through fluid conduit and a separate "donut-shaped' inflatable member having an aperture defined therein. For operation, the flow-through fluid conduit is inserted into the aperture of the inflatable member. When the flow-through inflatable plug assembly is inflated in a pipeline, the inflatable member fills the void between the inner diameter of the pipeline and the outer diameter of the flow-through fluid conduit.
US patent publication US5435478 discloses a method and apparatus for use in welding pipes. The apparatus includes means for viewing the interior of the pipe, means for establishing a predetermined atmosphere in the weld zone and means for clearing liquid from the interior of the pipe.

However, none of these documents disclose or suggest a plugging device adapted for use with a pipe where repair of the pipe requires high temperature welding of the pipe in the vicinity of the plugging device. The aforementioned devices are not suitable to remain in place within a pipe whilst substantially high or extreme temperatures are applied to the pipe, for example while welding of a copper water pipe is undertaken.

This identifies a need for an improved plugging device and method of use which overcomes or at least ameliorates problems inherent in the prior art.

The reference to any prior art in this specification is not, and should not be taken as, an acknowledgment or any form of suggestion that such prior art forms part of the common general knowledge.

### Disclosure Of Invention

The present invention seeks to provide an improved plugging device, and method of use, which is easily adapted to be inserted into and extracted from a pipe, to substantially prevent the flow of fluid within the pipe during repair of the pipe.

In one particular form, the present invention provides a plugging device for temporarily impeding the flow of a first fluid in a pipe, including:
a bladder, adapted to expand/contract upon the ingress/egress of a second fluid in the bladder; and,
an adaptor connecting the bladder and a pump, at least part of the adaptor being substantially heat resistant;
wherein, the pump is used to force the second fluid into the bladder.

Preferably, the plugging device is inserted into the pipe when in a contracted or deflated condition, and thereafter expanded or inflated such that at least a portion of the outer surface of the bladder abuts a portion of the inner walls of said pipe to thereby impede subsequent first fluid flow therein, and, thereafter, to remove the plugging device, the pump is released or a valve operated to permit the release of the second fluid from the bladder, such that the plugging device may be removed.

In a particular example form, the second fluid is air.

In a particular embodiment, the plugging device includes more than one adaptor to facilitate the insertion/expansion/contraction of the bladder. Preferably, the adaptor has a first end adapted to connect to the pump, and, a second end adapted to connect to the bladder.

Most preferably, and particularly when the device is utilised on metal pipes, the adaptor is constructed of heat resistant material.

Preferably, the bladder is constructed of rubber or plastic material, or other material having similar expansive properties.

Also preferably, the adaptor may be a heat resistant flexible hose. In a particular embodiment, more than one length of adaptor can be used by joining separate lengths together.

Also preferably, connection means between the bladder and the adaptor are constructed of metal, plastics, synthetic material and/or other like material.

In a particular form, part of the adaptor may be made of plastics, synthetic material and/or other like material, where that part is not exposed to high temperatures during repair of the pipe.

In a further broad form, the present invention provides a method of plugging a pipe to impede the flow of a first fluid therein, including the steps of:
inserting a plugging device as hereinbefore described, within the pipe; and,
actuating the pump to inflate/expand the bladder by the introduction of a second fluid therein.

Also, in a further broad form, the present invention provides a method of unplugging a pipe to permit the flow of a first fluid therein, when a plugging device is inserted within the pipe in accordance with the method as hereinbefore described, including the steps of:
releasing the pump, or operating a valve, to release the second fluid from within the bladder; and,
removing the plugging device from the pipe.

For example, the plugging device can be inserted/removed via an introduced pipe opening, such as a T-junction opening provided in the pipe. The T-junction opening can be formed into the pipe when the plugging device is to be utilised.

In a particular application, the pipe is a water pipe, such as a copper water pipe or a sewage pipe, and the plugging device is adapted to be inserted into the pipe during repair of the pipe.

### Brief Description Of Figures

The present invention will become more fully understood from the following detailed description of the preferred but non-limiting embodiment thereof, described in connection with the accompanying drawings, wherein:
Fig. 1 illustrates a preferred example of the plugging device in accordance with the present invention in a deflated condition;
Fig. 2 illustrates the plugging device being inserted into a section of pipe in which the flow of fluid is to be substantially stopped;
Fig. 3 illustrates a new section of pipe being attached to an existing section of pipe with the adaptor of the plugging device protruding through a new section of pipe opening;
Fig. 4 illustrates the repaired section of pipe placed in position and a pump, being attached to the adaptor, the pump able to inflate the bladder of the plugging device;
Fig. 5 illustrates the plugging device remaining inflated and within the pipe whilst the pipe is repaired by welding a seal.

### Modes for Carrying Out The Invention

The following modes, given by way of example only, are described in order to provide a more precise understanding of the subject matter of the present invention. In the figures, incorporated to illustrate features of an embodiment of the present invention, like reference numerals are used to identify like parts throughout the figures.

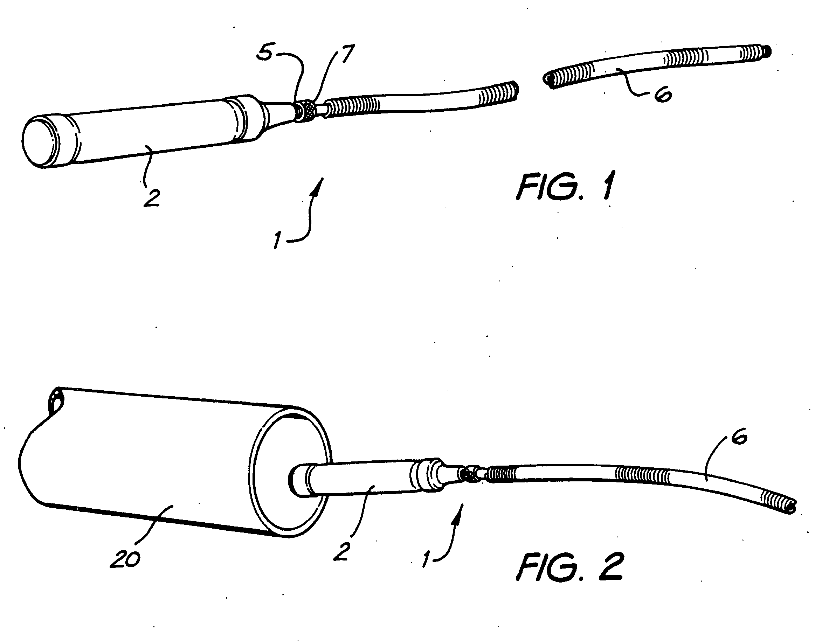

As shown in Fig. 1, and generally designated by the numeral 1, the plugging device 1 includes a bladder 2. The bladder 2 is preferably constructed of rubber, plastics, or other expansive/contractable material and is adapted to expand or contract upon the ingress or egress of fluids, such as air or other type of gas or liquids. Bladder 2 can be provided in a variety of sizes to suit a diameter or cross-sectional shape of pipe to be repaired.

The ingress or egress of air, or other gas, liquid or fluid, to/from bladder 2 is permitted by connector 5. Connector 5 is adapted to attach to adaptor end connector 7. This allows a pump or air supply device associated with adaptor 6 to force air along adaptor 6 for ingress of air into bladder 2. It will therefore be appreciated that the supply or removal of a second fluid, for example air, from the bladder 2 will result in the consequential expansion or contraction of bladder 2. Connector 5 and/or adaptor end connector 7 may be made of any suitable material, for example of a substantially heat resistant material such as a metal. Alternatively, it may be desirable to insulate bladder 2 from conduction of heat along adaptor 6, in which case connector 5 and/or adaptor end connector 7 may be made of a heat insulating material.

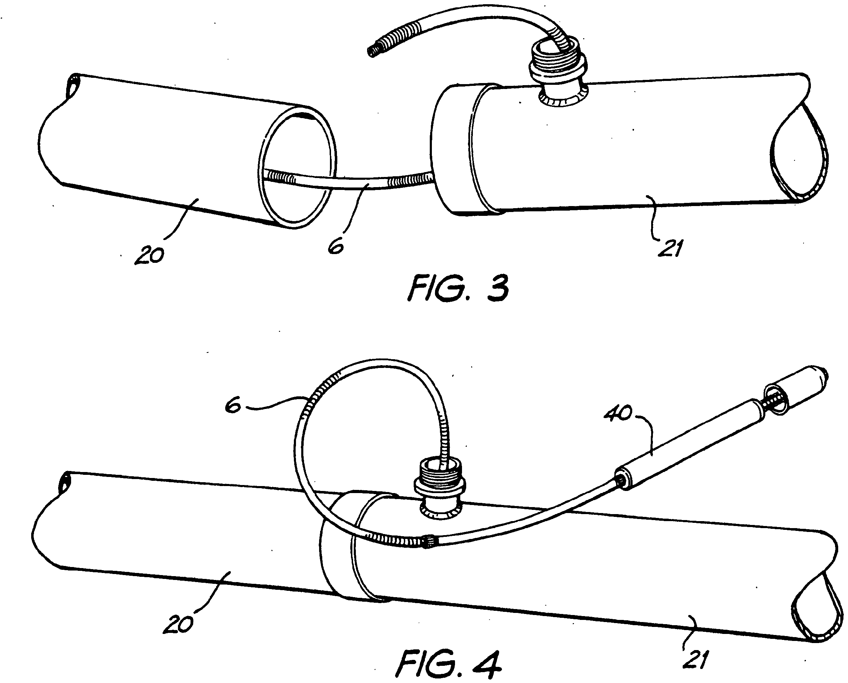

To expand bladder 2, a pump or other air supply device is attached to adaptor 6 as illustrated in the Fig. 4. More than one adaptor 6 could be used, attached together, if additional length is required. Adaptor 6 may be of any appropriate length having adaptor end connector 7 provided at an end of adaptor 6. Adaptor 6 may be a stainless steel flexible hose that is unbraided providing flexibility so that adaptor 6 can be bent as required in use. Alternatively, adaptor 6 could be a braided stainless steel flexible hose. In a particular example, adaptor 6 may be unbraided stainless steel flexible hose of length 1350 mm and diameter 11 mm.

Alternatively, it may be desirable in some embodiments to provide an elongated valve device constructed integrally with bladder 2 such that it is operable from an extended distance.

In another alternate embodiment, there may be provided a valve means at the junction of the pump and the adaptor 6, or integrated with the pump itself. In another alternate embodiment, the valve means may be provided at the end of adaptor 6 for connection to the pump. In this embodiment, the valve means may be embodied similarly to a valve on a car or bicycle tyre, that is, it may have a release pin, connected at one end thereof, adapted to be pushed to release air from bladder 2 by the valve means, and may have an appropriate connecting end adapted to receive the pump.

Referring to Figs. 2 - 5, when it is desired to repair a burst water pipe, the operator, for example a plumber, firstly turns off the water supply through the pipe 20. Then, pipe 20 is cut at an appropriate position on either side of the burst or damaged portion. The typical previous system of repair was to attempt to plug up the upstream portion of pipe 20 by use of bread or other dissolvable material. The plugging device 1 of the present invention is therefore utilised instead of this dissolvable material.

As illustrated in Fig. 2, the plugging device 1, with bladder 2 in a deflated state is inserted into the upstream end of water pipe 20. As illustrated in Fig. 3, adaptor 6 is threaded through a T-junction, or other suitable pipe exit means, of replacement pipe portion 21. Replacement pipe portion 21 is then fitted to pipe 20 so that deflated bladder 2 remains within pipe 20 but adaptor 6 now has an end external to the abutting water pipe portions 20 and 21.

Referring to Fig. 4, bladder 2 is then expanded by being inflated by use of pump 40, or other appropriate pressurised air or fluid supply means. Pump 40 is attached to the external end of adaptor 6. Inflation of bladder 2 continues until a reasonable seal or fluid block is at least partially formed between the exterior surface of bladder 2 and the inside surface of water pipe 20.

Obviously, whilst the illustrated bladder 2 is of circular cross-section and cylindrical shape, other desirable shapes may be utilised. For example, an ellipsoidal or spherical shaped bladder may be utilised. It will be appreciated by a person skilled in the art that different shaped bladders will have different resultant sealing effects to prevent the flow of water. Appropriate portions of the outside surface of bladder 2 may, if desirable, be provided with additional protrusions made of rubber or other material, a textured surface, or other features, which would facilitate better sealing.

In a particular embodiment, a small rubber bladder of length 85 mm and maximum diameter of 12 mm may be provided. Alternatively, a large rubber bladder of length 100 mm and maximum diameter 20 mm could be provided. Furthermore, a valve actuator tool could be provided to actuate or remove a valve core. The pump 40 could be a traditional bicycle tyre pump. However, a variety of other air pumping devices could be used. In alternate embodiments, a liquid or other type of gas could be used to inflate bladder 2 with a liquid or other type of gas pumping means replacing air pump 40.

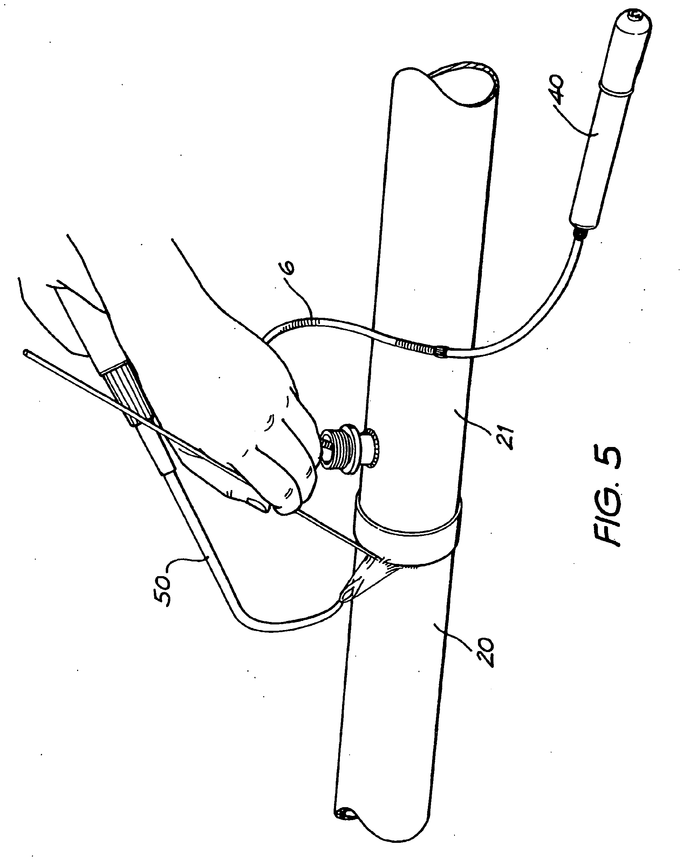

Referring to Fig. 5, once bladder 2 has been inserted into position and appropriately inflated by use of pump 40, thereby preventing the flow of water, pipe 20 may be permanently repaired by permanently fixing replacement pipe section 21 to pipe section 20. In the case of metallic water pipes, for example pipes made of copper, this is normally achieved by welding pipe sections 20 and 21 together using a welding tool 50. For example this may be achieved by use of Oxygen/Acetylene welding equipment.

Importantly, this results in a substantially high temperature being applied to pipe sections 20 and 21 whilst plugging device 1 is still in place. Adaptor 6 is made of a material, as previously described, able to withstand substantially high or extreme temperatures. Advantageously, the heat resistant properties of adaptor 6 enables the repairer to weld the pipe sections whilst the plugging device 1 remains internal to pipe section 20.

After the weld is completed, pump 40 can be removed so that bladder 2 can deflate to an unpressurised position. Alternatively, this can be achieved by activation of a valve if provided. This then allows bladder 2 to be withdrawn from the repaired pipe by pulling adaptor 6 out of the T-junction exit of replacement pipe section 21. The T-junction exit may be provided with a screw tapping or other type of opening thereon which, after removal of bladder 2, may be simply closed by fixing a cap thereon. Various other manners of performing this function would be obvious to persons skilled in the art.

In the fabrication of the various components it will be necessary to take into account the particular use of the device. As hereinbefore explained when the device is intended to be utilised in copper or metal pipes and when the repair involves the welding of the pipes it is important that certain components of the plugging device be constructed of suitable heat resistant material(s), capable of withstanding the welding temperatures. The bladder 2 may be constructed of heat resistant rubber or plastics material or other fabric material having similar expansive properties. The connection means 5 and 7 may be constructed of metal, plastics, synthetic and/or other material also having suitable heat resistant properties. The adaptor 6 should also be constructed of a material able to withstand high temperatures and preferably be of a flexible nature.

The invention may also be said to broadly consist of the parts, elements and features referred to or indicated herein, individually or collectively, in any or all combinations of two or more of the parts, elements or features, and wherein specific integers are mentioned herein which have known equivalents in the art to which the invention relates, such know equivalents are deemed to be incorporated herein as if individually set forth.

Although a preferred embodiment has been described in detail, it should be understood that various changes, substitutions, and alterations can be made by one of ordinary skill in the art without departing from the scope of the present invention.

## Claims

1. A plugging device (1) for impeding the flow of a first fluid in a pipe (20), including:
an expandable bladder (2) to receive a second fluid; and,
a flexible hose (6) providing a fluid communication pathway for the second fluid between the bladder and a pump (40), **characterised in that** the flexible hose is an unbraided or a braided stainless steel flexible hose.

2. The plugging device as claimed in claim 1, including more than one flexible hose.

3. The plugging device as claimed in any one of the claims 1 or 2, wherein a connector (5) is attached to or forms part of the bladder.

4. The plugging device as claimed in any one of the claims 1 to 3, wherein a hose end connector (7) is attached to or forms part of the flexible hose.

5. The plugging device as claimed in claims 3 or 4, wherein the connector associates with the hose end connector.

6. The plugging device as claimed in any one of the claims 1 to 5, wherein the flexible hose is provided with a valve.

7. The plugging device as claimed in any one of the claims 1 to 6, wherein one or more protrusions are provided on the exterior surface of the bladder.

## Patentansprüche

1. Stopfenvorrichtung (1) zum Verhindern des Stroms eines ersten Fluids in einem Rohr (20), umfassend:
eine ausdehnbare Blase (2) zum Empfang eines zweien Fluids; und
einen flexiblen Schlauch (6), de r einen Strömungsverbindungsweg für das zwei t e Fluid zwischen der Blase und einer Pumpe (40) bereitstellt, **dadurch gekennzeichnet, dass** der flexible Schlauch ein ungeflochtener oder ein geflochtener flexibler Schlauch aus rostfreiem Stahl ist.

2. Stopfenvorrichtung nach Anspruch 1, die mehr als einen flexiblen Schlauch umfasst.

3. Stopfenvorrichtung nach Anspruch 1 oder 2, wobei ein Verbinder (5) an der Blase befestigt ist oder einen Teil davon bildet.

4. Stopfenvorrichtung nach einem der Ansprüche 1 bis 3, wobei ei n Schlauchendverbinder (7) an dem flexiblen Schlauch befestigt ist oder einen Teil davon bildet.

5. Stopfenvorrichtung nach Anspruch 3 oder 4, wobei der Verbinder dem Schlauchendverbinder zugeordnet ist.

6. Stopfenvorrichtung nach einem der Ansprüche 1 bis 5, wobei der flexible Schlauch mit einem Ventil versehen ist.

7. Stopfenvorrichtung nach einem der Ansprüche 1 bis 6, wobei ein oder mehrere Vorsprünge an der Außenfläche der Blase vorgesehen sind.

## Revendications

1. Dispositif de bouchage (1) po u r empêcher l'écoulement d'un premier fluide dans un tuyau (20), comportant :
une vessie extensible (2) pour recevoir un second fluide ; et
un tuyau flexible (6) fournissant un chemin de communication fluidique pour le second fluide entre la vessie et une pompe (40), **caractérisé en ce que** le tuyau flexible est un tuyau flexible non tressé ou un tuyau flexible tressé en acier inoxydable.

2. Dispositif de bouchage selon la revendication 1, comportant plus d'un tuyau flexible.

3. Dispositif de bouchage selon l'une quelconque des revendications 1 ou 2, dans lequel un connecteur (5) est attaché à la vessie ou fait partie de cette dernière.

4. Dispositif de bouchage selon l'une quelconque des revendications 1 à 3, dans lequel un connecteur d'extrémité de tuyau (7) est attaché au tuyau flexible ou fait partie de ce dernier.

5. Dispositif de bouchage selon la revendication 3 ou 4, dans lequel le connecteur est associé au connecteur d'extrémité de tuyau.

6. Dispositif de bouchage selon l'une quelconque des revendications 1 à 5, dans lequel le tuyau flexible est muni d'une soupape.

7. Dispositif de bouchage selon l'une quelconque des revendications 1 à 6, dans lequel une ou plusieurs saillies sont prévues sur la surface extérieure de la vessie.
